# DEMANDE DE BREVET EUROPEEN

(11) **EP 1 978 163 A2**
(43) Date de publication de la demande: **08.10.2008**
(21) Numéro de dépôt: 08350002.5
(22) Date de dépôt: 18.03.2008
(51) Int. Cl.: E03B 3/03

(54) **Cloison verticale de séparation formant un réservoir pour la collecte d'eau pluviale**

(30) Priorité: 27.03.2007 FR 0702192
(71) Demandeur: Ecol'eaumur, 44150 Ancenis (FR)
(72) Inventeur: Cerisier, Fabrice, 44150 Ancenis (FR)
(74) Mandataire: Tournel, Jean Louis

(57) **Abrégé**

L'invention se rapporte à un élément (1) de séparation verticale parallélépipédique formant un réservoir ouvert sur le dessus caractérisé en ce qu' il comprend, à son sommet, une surface (3) inclinée de collecte de l'eau de pluie qui s'ajoute à la surface de l'ouverture du réservoir.

## Description

L'invention se rapporte à un élément vertical de séparation pouvant servir à former une clôture.

Pour former une séparation entre deux espaces que l'on souhaite délimiter, il existe plusieurs solutions.

Une des solutions connues consiste à ériger un mur à l'aide de briques ou de parpaings. Cette solution nécessite des fondations et est relativement longue à mettre en oeuvre. Cela nécessite souvent une autorisation des autorités locales.

Une deuxième solution consiste à utiliser des plaques de béton disposées entre deux montants.

Une autre solution consiste à utiliser des panneaux en treillis métalliques fixés sur des poteaux.

On connaît également des panneaux en bois que l'on fixe sur des montants.

Tous ces moyens ont une seule fonction à savoir séparer verticalement deux espaces.

Ils sont peu épais par rapport à la longueur et la longueur.

On connait des réservoirs JP 2003 213734 globalement cubique qui ne sont pas des éléments de séparation qui comprennent au dessus de l'ouverture des panneaux solaires. L'alimentation de ces réservoirs est faite par une conduite d'alimentation provenant d'une toiture annexe.

Ces panneaux solaires couvrent la presque totalité de l'ouverture et comme ils sont inclinés vers l'intérieur permettent accessoirement à l'eau de ruisseler dans le dit réservoir. Les panneaux débordent de la surface du réservoir mais uniquement par construction.

Ils n'ont pas vocation à servir de cloison de séparation car ils occupent au sol une trop grande surface.

On connaît une séparation WO 93/11310 constituée par un volume parallélépipédique ouvert sur le dessus constituant à la fois une paroi de séparation et à la fois une réserve d'eau.

Plusieurs de ces volumes peuvent être juxtaposés pour former une clôture de séparation. Chacun de ces volumes est fermé en partie supérieure par un couvercle que l'on retire momentanément pour nettoyer l'intérieur du réservoir.

Ces volumes sont reliés par des conduites les uns aux autres et l'un des volumes est relié à une descente d'eau de pluie captée par le toit d'une maison. La base de ces volumes est scellée dans le sol.

Cette solution est intéressante car elle permet de créer un mur d'eau.

Pour remplir ces volumes il est prévu de relier un volume à une descente d'eau de pluie pour la collecte d'un toit de bâtiment. Le remplissage de ces réservoirs dépend totalement de la surface du toit de la maison.

Malheureusement lorsque l'implantation de la maison est en partie centrale du terrain et ne jouxte pas un coté du terrain, on comprend que cela pose des difficultés pour alimenter la clôture ainsi constituée.

Le remplissage est totalement dépendant de la descente d'eau de pluie.

L'invention se propose d'apporter une solution.

A cet effet, l'invention a pour objet une cloison de séparation verticale parallélépipédique formant un réservoir selon les caractéristiques de la revendication principale.

L'invention sera bien comprise à l'aide de la description ci après faite à titre d'exemple non limitatif en regard du dessin qui représente schématiquement :
FIG 1 : Vue en perspective d'un élément de séparation selon l'invention
FIG 2 : Vue de coté d'un élément de séparation selon l'invention
FIG 3 : Une variante d'un élément de séparation.
FIG 4 : Une vue de dessus d'un élément vertical engagé sur un poteau
FIG 5 : Une vue latérale d'un système d'assemblage entre deux éléments verticaux.

En se reportant au dessin, on voit une cloison 1 de séparation verticale parallélépipédique formant un réservoir ouvert sur le dessus. Cet élément creux est délimité par deux grandes faces 2A latérales, deux petits cotés 2B et un fond 2C.

Par élément ou cloison de séparation, on comprendra un élément de faible épaisseur par rapport à la hauteur et sa longueur. L'épaisseur de cette cloison sera comprise entre dix et quarante centimètres pour une longueur de deux mètres environ.

Le but est de ne pas occuper trop de place au sol mais de pouvoir cependant collecter plus d'eau que celle que pourrait collecter la seule ouverture de la cloison lors des chutes de pluie.

Selon l'invention, la cloison comprend, à son sommet, une surface 3 supplémentaire de collecte de l'eau de pluie qui s'ajoute à l'ouverture découverte. Cette surface s'étend latéralement à l'ouverture du réservoir et guide l'eau de pluie qui tombe dessus à la manière d'une pente de toit vers l'intérieur du volume de la cloison. Cette surface complémentaire est portée par un ou deux bords de la cloison épaisse.

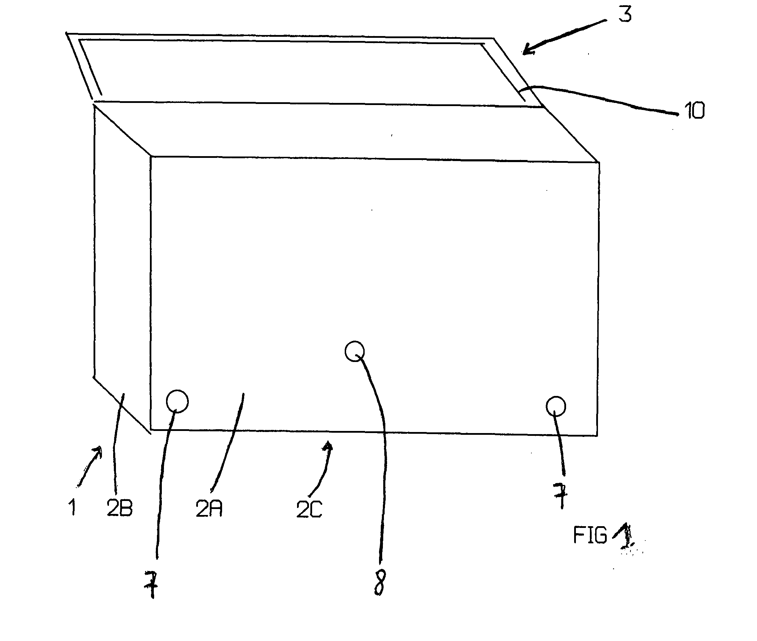

Cette surface qui est au moins égale à l'ouverture de l'élément de séparation s'additionne à cette ouverture. Cette surface 3 de collecte st inclinée vers le bas en direction de l'ouverture du réservoir. La surface de captage totale de l'eau va donc être constituée par la surface de l'ouverture de la réserve mais également par la surface de collecte 3 attenante s'étendant vers l'extérieur. Par exemple, cette surface 3 est constituée par la face interne d'au moins un volet 3A, 3B servant également de couvercle. Cette surface de collecte 3 est, dans une forme de réalisation figure 1, obtenue par le cumul de plusieurs volets, chaque volet ayant une étendue proche de la surface de l'ouverture. Lorsqu'il y a 3 volets de chaque coté de la cloison, on collecte sur une surface égale à sept fois l'ouverture.

Le choix que chaque surface de collecte supplémentaire est équivalente à celle de l'ouverture permet de l'utiliser comme un couvercle.

Ainsi, la surface de collecte pourra servir de couvercle l'hiver pour empêcher l'eau de pénétrer dans le réservoir et éviter lors d'une période de gel, la possible destruction du réservoir. Cette surface complémentaire aura donc deux fonctions, la collecte et le couvercle.

Il est prévu au long de trois bords de la surface de collecte des nervures 10 contribuant à canaliser l'eau notamment en cas de vent qui peut pousser l'eau de la surface de collecte selon une mauvaise direction. Le seul bord qui n'est pas pourvu de nervures est celui qui se confond avec le bord supérieur du réservoir. Ces nervures ont pour but que sous l'effet du vent une partie de l'eau ne s'échappe de la surface de collecte vers une mauvaise direction.

Il est prévu en partie haute du réservoir que constitue la cloison, un filtre en forme de tamis pour retenir les feuilles. Celui ci s'étend au travers de l'ouverture et à un niveau en dessous du bord supérieur.

Cette surface de collecte de l'eau sera soit amovible soit solidarisée à la partie formant réservoir. Elle jouxte le bord supérieur du réservoir.

Ce volet sera fixé, par exemple, sur le haut de l'élément réservoir par une charnière. Cette charnière sera obtenue, par exemple, par amincissement de la matière lors de la fabrication de l'élément de séparation par exemple par injection dans un moule ou roto-moulage.

Il est prévu des butées 5 de verrouillage pour maintenir le volet ou les volets dans une position active où la surface collectera la pluie. Ces butées sont localisées au niveau de la face des volets qui ne sert pas à collecter l'eau de pluie. Ces butées peuvent être remplacées par des moyens d'encliquetage permettant de maintenir les volets ouverts dans la configuration de réception de l'eau de pluie.

Les butées vont limiter l'ouverture des volets à 180° et vont empêcher les volets de se rabattre l'un sur l'autre en cas de vent.

Sont donc prévus des moyens 5 en vue de maintenir les volets en leurs positions actives et éviter que sous l'effet du vent ceux ci se rabattent sur l'ouverture du réservoir ou les uns sur les autres.

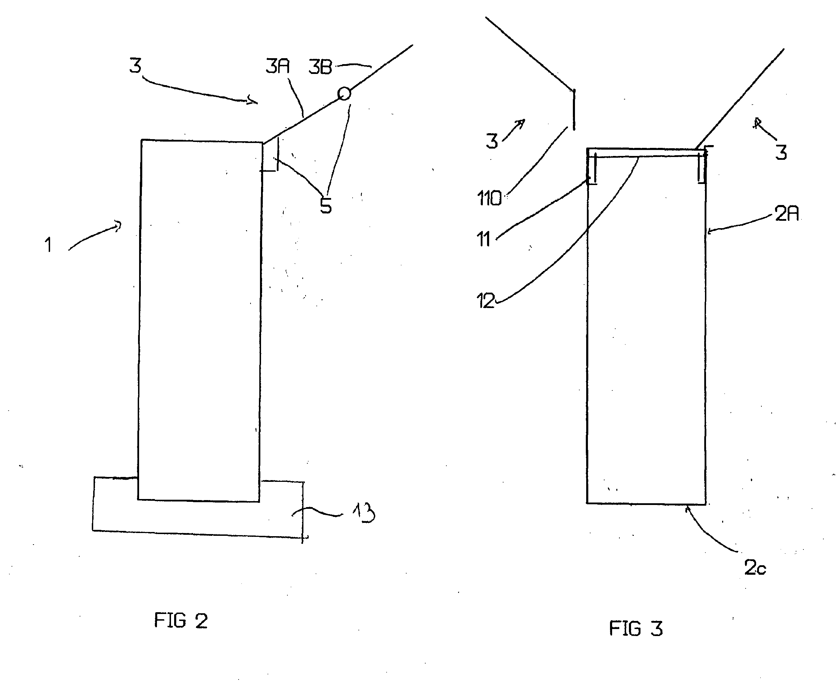

Dans une seconde variante (figure 3), la surface 3 de collecte dispose de moyen 6 pour sa fixation amovible sur le haut de l'élément de réservoir.

Il peut s'agir d'une patte 110 venant s'engager dans un passant 11 ou d'une pièce en forme de pinces venant chevaucher le bord supérieur de l'élément réservoir.

Le passant 11 sera, de préférence positionnée sur la face interne du réservoir et pourra être utilisé pour soutenir une plaque 12 filtre retenant les feuilles.

Le bord 3A proximal de cette surface de collecte sera légèrement en surplomb de l'ouverture du réservoir afin que l'eau coule dans le dit réservoir et non en dehors.

L'encombrement au sol de cette cloison reste limitée à la surface de la base de la dite cloison.

Dans une configuration de cloison séparant deux propriétés, la surface supplémentaire de collecte pourra être posée uniquement du coté du propriétaire des cloisons si le voisin ne veut pas que la surface collectrice empiète sur son terrain.

Il est prévu à la base un connecteur 7 hydraulique pour placer les éléments réservoirs en série.

Il sera prévu également au moins un moyen 8 pour brancher un robinet ou une pompe pour prélever de l'eau.

On pourra toujours prévoir une possible connexion à une descente d'eau d'un bâtiment.

Pour son maintien dans un plan vertical, l'élément réservoir peut être posé sur un support 13 fixé au sol sur lequel il s'emboîte. Cela reste une possibilité mais qui sera probablement peut utilisée. La cloison réservoir sera le plus souvent maintenue à ses deux extrémités par des montants 14 fixés dans le sol tels que des poteaux à feuillures.

Cette solution permet à un locataire de poser ce type de clôture et de la démonter s'il doit quitter les lieux.

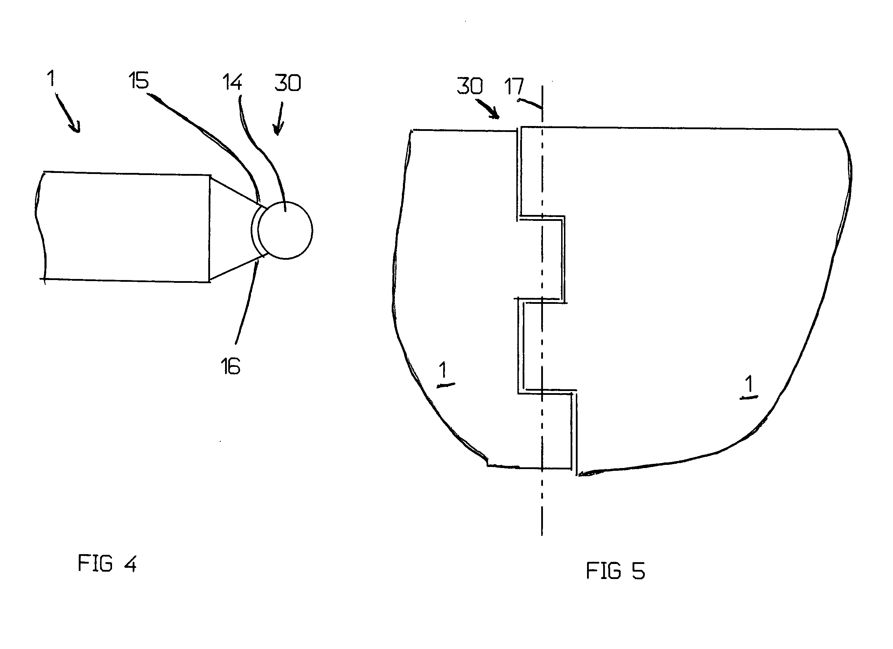

On a illustré en figure 4 une solution permettant d'orienter les réservoirs l'un par rapport à l'autre. On voit que le poteau 14 d'appui est de section circulaire et sur cette face cylindrique vient prendre appui deux bords libres de deux ailes 15,16 convergentes. Ces ailes convergentes pourraient être reliées par une portion de cylindre. L'élément de séparation est calé entre deux poteaux.

Il est donc prévu un moyen 30 d'assemblage avec le poteau ou avec un autre élément par coopération de formes.

Dans une seconde variante, les faces en vis à vis de deux éléments de séparation sont complémentaires à la manière d'une charnière à piano ou d'une liaison dite à enfourchement multiple (figure 5) avec un élément traversant 17 faisant axe de rotation. On a donc un moyen d'assemblage avec orientation angulaire.

Des avantages de cet élément de séparation sont
- qu'il est amovible,
- Qu'il est simple à mettre en oeuvre,
- Qu'il forme un écran pour l'intimité,
- Et qu'il sert de réservoir d'eau.

On peut ainsi constituer une réserve d'eau importante qui soit esthétique et ne nécessitant pas de travaux de terrassement pour la dissimuler.

Son caractère amovible est intéressant car l'élément peut être emporté lors d'un déménagement.

La face apparente pourra présenter un relief pour que l'élément apparaisse comme un mur de pierre ou un mur de brique c'est à dire un mur architecturé.

Cet élément de séparation sera moulé par injection ou rotomoulé.

## Revendications

1. Cloison (1) de séparation verticale parallélépipédique creuse délimitée par deux grandes faces (2A) latérales, deux petits cotés (2B) et un fond (2C) formant un réservoir ouvert sur le dessus **caractérisée en ce qu'**elle comprend, à son sommet, une surface (3) inclinée de collecte de l'eau de pluie qui s'ajoute latéralement à la surface découverte de l'ouverture du réservoir, cette surface ajoutée étant au moins d'étendue proche de la surface de l'ouverture.

2. Cloison de séparation verticale selon la revendication 1 **caractérisée en ce que** la surface (3) de collecte est constituée par la face interne d'au moins un volet servant également de couvercle.

3. Cloison de séparation verticale selon la revendication 2 **caractérisée en ce que** la surface de collecte est en plusieurs volets, chaque volet ayant une étendue proche de la surface de l'ouverture.

4. Cloison de séparation verticale selon la revendication 2 ou 3 **caractérisé en ce qu'**il comprend des moyens (5) de verrouillage pour maintenir le volet ou les volets dans une position active.

5. Cloison de séparation verticale selon la revendication 2 ou 3 **caractérisée en ce que** le volet est fixé sur le haut de l'élément réservoir par un charnière.

6. Cloison de séparation verticale selon la revendication 2 ou 3 **caractérisée en ce que** le volet comporte des moyens 6 de fixation amovible sur le haut de l'élément de réservoir.

7. Cloison de séparation verticale selon l'une quelconque des revendications précédentes **caractérisée en ce que** la surface de collecte est bordée sur trois cotés par une nervure (10).

8. Cloison de séparation verticale selon l'une quelconque des revendications précédentes **caractérisée en ce qu'**elle comprend un connecteur (7) hydraulique pour placer les cloisons en série.

9. Cloison de séparation verticale selon l'une quelconque de revendications précédentes **caractérisée en ce qu'**elle comprend un moyen (8) pour prélever de l'eau dans le réservoir

10. Cloison de séparation verticale selon l'une quelconque des revendications précédentes **caractérisée en ce qu'**elle présente un moyen (30) d'assemblage avec un poteau ou avec un autre élément par coopération de formes.

11. Cloison de séparation verticale selon la revendication 10 **caractérisée en ce que** le moyen (30) d'assemblage permet une orientation de l'élément.

12. Clôture **caractérisée en ce qu'**elle comprend au moins un élément de séparation selon l'une quelconque des revendications précédentes.
